Europäisches Patentamt

European Patent Office

Office européen des brevets

(19)

(11) Veröffentlichungsnummer : **0 405 329 B1**

## (12) EUROPÄISCHE PATENTSCHRIFT

(45) Veröffentlichungstag der Patentschrift :
**28.04.93 Patentblatt 93/17**

(51) Int. Cl.$^5$ : **C09J 5/00, C09J 175/04**

(21) Anmeldenummer : **90111738.2**

(22) Anmeldetag : **21.06.90**

(54) **Klebestift mit verbesserter Klebkraft.**

Verbunden mit 90909715.6/0479845
(europäische
Anmeldenummer/Veröffentlichungsnummer)
durch Entscheidung vom 18.05.92.

(30) Priorität : **30.06.89 DE 3921554**

(43) Veröffentlichungstag der Anmeldung :
**02.01.91 Patentblatt 91/01**

(45) Bekanntmachung des Hinweises auf die
Patenterteilung :
**28.04.93 Patentblatt 93/17**

(84) Benannte Vertragsstaaten :
**AT BE CH DE DK ES FR GB GR IT LI NL SE**

(56) Entgegenhaltungen :
**EP-A- 0 024 864
EP-A- 0 188 809
DE-A- 1 811 466**

(73) Patentinhaber : **Henkel
Kommanditgesellschaft auf Aktien
Postfach 1100 Henkelstrasse 67
W-4000 Düsseldorf 1 (DE)**

(72) Erfinder : **Gierenz, Gerhard, Dr.
Dieselstrasse 80
W-5650 Solingen 19 (DE)**
Erfinder : **Klauck, Wolfgang, Dr.
Gelvenweg 2
W-4005 Meerbusch 2 (DE)**
Erfinder : **Höfer, Rainer, Dr.
Kleverstrasse 31
W-4000 Düsseldorf 30 (DE)**
Erfinder : **Grützmacher, Roland
Heinrich-Heine-Strasse 2
W-5603 Wülfrath (DE)**

## Beschreibung

Stiftförmige starre Klebstoffe, die in einer verschließbaren Hülle verschiebbar gelagert sind und beim Abreiben auf eine Empfängerfläche einen klebrigen Film hinterlassen, sind heute Gebrauchsgegenstände des täglichen Lebens. Sie enthalten insbesondere - siehe hierzu DE-PS 18 11 466 wasserlösliche bzw. wasserdispergierbare synthetische Hochpolymere mit Klebstoffcharakter - insbesondere Polyvinylpyrrolidon (PVP) - gelöst in einer wäßrig-organischen Flüssigphase zusammen mit einer formgebenden Gerüstsubstanz. Als Gerüstsubstanz werden insbesondere Alkali- bzw. Ammoniumsalze aliphatischer Carbonsäuren, insbesondere des C-Zahlbereichs von etwa 12 bis 22, verwendet. Werden die an sich hochklebrigen wäßrigen Aufbereitungen der Polymersubstanzen mit Klebstoffcharakter zusammen mit geringen Mengen der Gerüstsubstanz auf Basis von Fettsäureseifen auf höhere Temperaturen, insbesondere oberhalb 60° C erwärmt und läßt man dann diese Lösung in Ruhestellung abkühlen, so erstarrt das Stoffgemisch zu einem mehr oder weniger steifen Seifengel, in dem die formgebende und vergleichsweise starre Micellstruktur solcher Seifengele zunächst überwiegend in Erscheinung tritt. Das ermöglicht die bekannte Ausbildung und Handhabung solcher Massen in Stiftform in verschließbaren Hülsen. Beim Abreiben wird die Micellstruktur zerstört und damit die starre Masse in den pastösen Zustand umgewandelt, in dem dann der Klebstoffcharakter des Stoffgemisches in den Vordergrund tritt.

Es sind zahlreiche Versuche unternommen worden, Klebestifte dieser Art durch Veränderung der formgebenden Gerüstsubstanz und/oder durch Veränderung der mit Lösungsmittel aktivierten klebstoffbildenden Komponente zu verändern. Die DE-AS 22 04 482 verwendet als formgebende Gerüstsubstanz das Reaktionsprodukt von Sorbit und Benzaldehyd. Nach der Lehre der DE-OS 26 20 721 sollen Salze von substituierten Terephthalsäureamiden als Geliermittel verwendet werden. Gemäß DE-OS 20 54 503 sollen anstelle der Alkalimetallsalze von aliphatischen Carbonsäuren freie langkettige aliphatische Säuren oder deren Ester die Gerüstsubstanz darstellen. Die DE-OS 22 19 697 will solche Klebestifte dadurch verbessern, daß anionische nichtseifige Netzmittel dem Stift einverleibt werden, insbesondere um dessen Abrieb auf der Unterlage zu verbessern. Gemäß der DE-OS 24 19 067 soll als gelbildendes Mittel ein Reaktionsprodukt aus aromatischen Diisocyanaten mit Mono- und/oder Dialkanolaminen Verwendung finden.

Trotz aller dieser Vorschläge wird bis zum heutigen Tage wenigstens in weitaus überwiegendem Umfang die älteste Form der hier betroffenen Klebestifte auf Basis von Seifengelen eingesetzt, wie sie in der eingangs zitierten DE-PS 18 11 466 beschrieben sind. Eine Lösung von PVP in einem wäßrig-organischen Lösungsmittelgemisch wird durch Einarbeitung von Alkaliseifen aliphatischer Carbonsäuren in die Form des weich abreibbaren Klebestifts umgewandelt.

In der deutschen Patentanmeldung DE 36 06 382 wird ein verbesserter Klebestift beschrieben, der zur Verbesserung der Abreibfähigkeit zusätzlich eine begrenzte Menge an Lactamen niederer Aminocarbonsäuren und/oder die entsprechenden ringgeöffneten Aminocarbonsäuren enthält.

Wenngleich die genannten Klebestifte für die Papierverklebung ausreichende Festigkeit bieten, so besteht doch der Wunsch, Stifte zu erhalten, die universeller einsetzbar sind und mit denen Verklebungen höhere Festigkeiten hergestellt werden kann. Insbesondere soll vermieden werden, daß unter klimatisch ungünstigen Bedingungen sich die mit den Stiften hergestellten Papierverklebungen wieder lösen.

Ein weiterer Nachteil der bekannten Klebestifte ist darin zu sehen, daß die Stiftmasse vor der Seifengel-Bildung im erwärmten Zustand hochviskos ist, was zur Blasenbildung führt und auch sonst die Bearbeitung erschwert.

Es ist daher Aufgabe der Erfindung, einen diesbezüglich verbesserten Klebestift bereitzustellen, der auf einer wäßrigen Polyurethan-Dispersion basiert und für Verklebungen höherer Festigkeit geeignet ist. Eine weitere sehr spezielle Aufgabe der Erfindung ist es, einen derartigen Klebestift bereitzustellen, der ohne die Mitverwendung von wasserlöslichen Weichmachern oder organischen Lösungsmitteln formuliert werden kann.

Gegenstand der Erfindung ist daher ein formstabiler weich abreibbarer Klebestift, bestehend aus einer wäßrigen Zubereitung eines synthetischen Polymeren und einem Seifengel als formgebender Gerüstsubstanz sowie gewünschtenfalls weiteren Hilfsstoffen, dadurch gekennzeichnet, daß als wäßrige Zubereitung eines synthetischen Polymeren eine zumindest weitgehend lösungsmittelfreie wäßrige Polyurethan-Dispersion enthalten ist.

Die erfindungsgemäßen Klebstifte enthalten somit eine wäßrige Polyurethan-Dispersion als klebende Polymerkomponente. Unter Polyurethan-Dispersionen werden hier ganz breit Reaktionsprodukte von mehrfunktionellen Alkoholen, Aminoalkoholen oder Aminen einerseits, mit mehrfunktionellen Isocyanaten andererseits verstanden, die entweder zusätzlich in die Kette einreagierte Bausteine enthalten, die nach Neutralisation ionische Gruppen bilden können und zusätzlich oder an Stelle solcher Gruppen hydrophile nichtionische Bestandteile enthalten, wodurch die Polymeren bei Wasserzugabe selbstdispergierend sind. Im Sinne der Erfindung sind besonders feinteilige Polyurethan-Dispersionen bevorzugte Ausgangsmaterialien für Klebestifte, die opak durchscheinend bis durchsichtig aussehen, und bei denen das Polymere zumindest anteilsweise in Lösung vorliegen dürfte. Dabei gilt das Fachwissen des Polyurethan-Fachmannes, der über den Anteil an ionischen und/oder nicht-ionischen Bestandteilen die Feinteiligkeit beeinflussen kann.

Die als synthetische Polymere in den Klebestiften eingesetzten Polyurethan-Dispersionen enthalten als Ausgangsprodukt einreagiert ein Polyol oder eine Polyolmischung. Ganz allgemein gilt hier, daß diese Polyole über zumindest zwei reaktionsfähige Wasserstoffatome verfügen müssen und im wesentlichen linear sind. Dabei liegt das Molekulargewicht zwischen 300 und 40.000, vorzugsweise zwischen 500 und 6.000. Eingesetzt werden können Polyesterpolyole, Polyacetalpolyole, Polyetherpolyole, Polythioetherpolyole, Polyamidpolyole oder Polyesteramidpolyole mit jeweils 2 bis 4 Hydroxylgruppen, die auch teilweise durch Aminogruppen ausgetauscht sein können.

Darüber hinaus können als nichtionische hydrophile Modifizierungsmittel noch zusätzlich monofunktionelle Alkohole, insbesondere Etheralkohole eingesetzt werden. Bevorzugt sind dabei die Umsetzungsprodukte von $C_1$ - $C_{10}$-Alkoholen mit Ethylenoxid im Molekulargewichtsbereich bis 20 000, vorzugsweise 200 bis 6 000.

Als Polyether seien z.B. die Polymerisationsprodukte des Ethylenoxids, Propylenoxids, Butylenoxids sowie ihre Misch- oder Pfropfpolymerisationsprodukte sowie die durch Kondensation von mehrwertigen Alkoholen oder Mischungen derselben und die durch Alkoxylierung von mehrwertigen Alkoholen, Aminen, Polyaminen und Aminoalkoholen gewonnenen Polyether genannt. Auch isotaktisches Polypropylenglykol kann Verwendung finden.

Bevorzugtes Polyetherpolyol ist das Polytetrahydrofuran. Unter Polytetrahydrofuran werden hier Polyether verstanden, die theoretisch oder tatsächlich durch ringöffnende Polymerisation von Tetrahydrofuran dargestellt werden können, und an beiden Kettenenden jeweils eine Hydroxylgruppe aufweisen. Geeignete Produkte haben dabei einen Oligomerisationsgrad von ca. 1,5 bis 150, vorzugsweise von 5 bis 100.

Eine weitere bevorzugte Klasse von Polyolen sind Polycarbonatpolyole. Bevorzugt sind hier aliphatische Polycarbonatpolyole, also Ester der Kohlensäure mit difunktionellen Alkoholen der Kettenlänge $C_2$ bis $C_{10}$. Weniger geeignet sind Polycarbonatpolyole auf Basis Kohlensäure und Bisphenol-A.

Als Polyacetale kommen z. B. die aus Glykolen wie Diethylenglykol Triethylenglykol, 4,4'-Dioxethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.

Unter den Polythioethern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten um Polythioether, Polythiomischether, Polythioetherester, Polythioetheresteramide. Derartige Polyhydroxylverbindungen können auch in alkylierter Form bzw. in Mischung mit Alkylierungsmitteln angewandt werden.

Zu den Polyestern, Polyesteramiden und Polyamiden zählen die aus mehrwertigen gesättigten und ungesättigten Carbonsäuren bzw. deren Anhydriden und mehrwertigen gesättigten und ungesättigten Alkoholen, Aminoalkoholen, Diaminen, Polyaminen und ihren Mischungen gewonnenen, überwiegend linearen Kondensate, sowie z.B. Polyterephthalate oder Polycarbonate. Auch Polyester aus Lactonen, z. B. Caprolacton oder aus Hydroxycarbonsäuren sind verwendbar. Die Polyester können Hydroxyl- oder Carboxylendgruppen aufweisen. Zu ihrem Aufbau können als Alkoholkomponente auch höhermolekulare Polymerisate oder Kondensate, wie z.B. Polyether, Polyacetale, Polyoxymethylene (mit)verwendet werden.

Auch bereits Urethan- oder Harnstoffgruppen enthaltende Polyhydroxylverbindungen sowie gegebenenfalls modifizierte natürliche Polyole wie Rizinusöl sind verwendbar. Grundsätzlich kommen auch Polyhydroxylverbindungen, welche basische Stickstoffatome aufweisen, in Frage, z. B. polyalkoxylierte primäre Amine oder Polyester bzw. Polythioether, welche Alkyl-diethanolamin einkondensiert enthalten. Weiterhin eingesetzt werden können Polyole, die durch vollständige oder teilweise Ringöffnung epoxidierter Triglyceride mit primären oder sekundären Hydroxylverbindungen erzeugt werden können, beispielsweise das Umsetzungsprodukt von epoxidiertem Sojaöl mit Methanol.

Als Polyisocyanate in den erfindungsgemäßen PU-Dispersionen sind alle aromatischen und aliphatischen Diisocyanate geeignet, wie z. B. 1,5-Naphthylendiisocyanat, 4.4'-Diphenylmethandiisocyanat, 4,4'-Diphenyldimethylmethandiisocyanat, Di- und Tetraalkyldiphenylmethandiisocyanat, 4,4'-Dibenzyldiisocyanat, 1,3-Phenylendiisocyanat, 1,4-Phenylendiisocyanat, die Isomeren des Toluylendiisocyanats, gegebenenfalls in Mischung, 1-Methyl-2,4-diisocyanato-cyclohexan, 1,6-Diisocyanato-2,2,4-trimethyl-hexan, 1,6-Diisocyanato-2,4,4-trimethylhexan, 1-Isocyanatomethyl-3-isocyanato-1,5,5-trimethyl-cyclohexan, chlorierte und bromierte Diisocyanate, phosphorhaltige Diisocyanate, 4,4'-Diisocyanatophenylperfluorethan, Tetramethoxy-butan-1,4-diisocyanat, Butan-1,4-diisocyanat, Hexan-1,6-diisocyanat, Dicyclohexylmethan-diisocyanat, Cyclohexan-1,4-diisocyanat, Ethylendiisocyanat, Phthalsäure-bis-isocyanatoethylester, ferner Polyisocyanate mit reaktionsfähigen Halogenatomen, wie 1-Chlormehtylphenyl-2,4-diisocyanat, 1-Brommethylphenyl-2,6-diisocyanat, 3,3-Bis-chlormethylether-4,4'-diphenyldiisocyanat. Schwefelhaltige Polyisocyanate erhält man beispielsweise durch Umsetzung von 2 mol Hexamethylen-diisocyanat mit 1 mol Thiodiglykol oder Dihydroxydihexylsulfid. Weitere wichtige Diisocyanate sind Trimethylhexamethylendiisocyanat, 1,4-Diisocyanatobutan, 1,2-Diisocyanatododecan und Dimerfettsäurediisocyanat. Die vorgenannten Isocyanate können allein oder auch in Mischung eingesetzt werden. Bevorzugt sind cyclische oder verzweigte aliphatische Diisocyanate wie Isophorondiisocyanat, aber auch Hexamethylendiisocyanat. Unter den aromatischen Diisocyanaten ist Tetramethylxyloldiisocyanat (TMXDI) bevorzugt.

Beim Aufbau der erfindungsgemäß eingesetzten Polyurethan-Dispersionen können auch Kettenverlängerungsmittel mit reaktionsfähigem Wasserstoff eingesetzt werden.

Zu den Kettenverlängerungsmitteln mit reaktionsfähigen Wasserstoffatomen zählen:

- die üblichen gesättigten und ungesättigten Glykole, wie Ethylenglykol oder Kondensate des Ethylenglykols, Butandiol-1,3, Butandiol-1,4, Butendiol, Propandiol-1,2, Propandiol-1,3, Neopentylglykol, Hexandiol, Bis-hydroxymethyl-cyclohexan, Dioxyethoxyhydrochinon, Terephthalsäure-bis-glykolester, Bernsteinsäure-di-2-hydroxyethyl-amid, Bernsteinsäure-di- N-methyl-(2-hydroxy-ethyl) -amid, 1,4-Di-(2-hydroxy-methyl-mercapto)-2,3,5,6-tetrachlorbenzol, 2-Methylenpropandiol-(1,3), 2-Methyl-propandiol-(1,3);
- aliphatische, cycloaliphatische und aromatische Diamine wie Ethylendiamin, Hexamethylendiamin, 1,4-Cyclohexylendiamin, Benzidin, Diamino-diphenylmethan, Dichlor-diamino-diphenylmethan, die Isomeren des Phenylendiamins, Hydrazin, Ammoniak, Carbohydrazid, Adipinsäure-dihydrazid, Sebacinsäuredihydrazid, Piperazin, N-Methyl-propylendiamin, Diaminodiphenylsulfon, Diaminodiphenylether, Diaminodiphenyldimethylmethan, 2,4-Diamino-6-phenyltriazin;
- Aminoalkohole wie Ethanolamin, Propanolamin, Butanolamin, N-Methyl-ethanolamin, N-Methyl-isopropanolamin;
- aliphatische, cycloaliphatische, aromatische und heterocyclische Mono- und Diaminocarbonsäuren wie Glycin, 1- und 2-Alanin, 6-Aminocapronsäure, 4-Aminobuttersäure, die isomeren Mono- und Diaminobenzoesäuren, die isomeren Mono- und Diaminonaphthoesäuren;
- Wasser

Es ist hervorzuheben, daß im Rahmen vorliegender Erfindung nicht streng zwischen den Verbindungen mit reaktionsfähigen Wasserstoffatomen mit einem Molekulargewicht von 300 bis 20 000 und den sogenannten "Kettenverlängerungsmitteln" unterschieden werden kann, da die Übergänge zwischen den beiden Verbindungsklassen fließend sind. Verbindungen, die nicht aus mehreren Monomereinheiten aufgebaut sind, jedoch ein Molekulargewicht über 300 aufweisen, wie z.B. 3,3'-Dibrom-4,4'-diaminodiphenylmethan, werden zu den Kettenverlängerungsmitteln gerechnet, ebenso jedoch Pentaethylenglykol, obwohl letzteres seiner Zusammensetzung nach eigentlich ein Polyetherdiol ist.

Spezielle Kettenverlängerungsmittel mit mindestens einem basischen Stickstoffatom sind z.B. mono-, bis-oder polyoxalkylierte aliphatische, cycloaliphatische, aromatische oder heterocyclische primäre Amine, wie N-Methyldiethanolamin, N-Ethyl-diethanolamin, N-Propyl-diethanolamin, N-Isopropyl-diethanolamin, N-Butyl-diethanolamin, N-Isobutyl-diethanolamin, N-Oleyl-diethanolamin, N-Stearyl-diethanolamin, oxethyliertes Kokosfettamin, N-Allyl-diethanolamin, N-Methyl-diisopropanolamin, N-Ethyl-diisopropanolamin, N-Propyl-diisopropanolamin, N-Butyl-diisopropanolamin, C-Cyclohexyl-diisopropanolamin, N,N-Dioxethylanilin, N,N-Dioxethyltoluidin, N,N-Dioxethyl-1-aminopyridin, N,N'-Dioxethyl-piperazin, Dimethyl-bis-oxethylhydrazin, N,N'-Bis-(2-hydroxy-ethyl)-N,N'-diethyl-hexahydro-p-phenylendiamin, N-12-Hydroxyethyl-piperazin, polyalkoxylierte Amine wie oxypropyliertes Methyl-diethanolamin, ferner Verbindungen wie N-Methyl-N,N-bis-3-aminopropylamin, N-(3-Aminopropyl)-N,N'-dimethylethylendiamin, N-(3-Aminopropyl)-N-methyl-ethanolamin, N,N'-Bis-(3-aminopropyl)-N,N'-dimethylethylendiamin, N,N'-Bis(3-aminopropyl)-piperazin, N-(2-Aminoethyl)-piperazin, N,N'-Bisoxyethyl-propylendiamin, 2,6-Diaminopyridin, Diethanolamino-acetamid, Diethanolamido-propionamid, N,N-Bis-oxyethyl-phenyl-thiosemicarbazid, N,N-Bis-oxethyl-methyl-semicarbazid, p,p'-Bis-aminomethyl-dibenzylmethylamin, 2,6-Diaminopyridin, 2-Dimethylaminomethyl-2-methyl-propandiol-1,3.

Die den erfindungsgemäß eingesetzten Polyurethan-Dispersionen zugrundeliegenden Polyurethane haben weiterhin als wichtigen Bestandteil eine in wäßriger Lösung zur Salzbildung befähigte funktionelle Komponente. Als solche können eingesetzt werden Dihydroxy- oder auch Diamino-Verbindungen, die eine ionisierbare Carbonsäure-, sulfonsäure- oder Ammoniumgruppe enthalten. Diese Verbindungen können entweder als solche eingesetzt werden oder sie können in-situ hergestellt werden. Um ionisierbare Carbonsäuregruppen tragende Verbindungen in das Polyurethan einzubringen, kann der Fachmann den Polyolen Dihydroxycarbonsäuren zugeben. Eine bevorzugte Dihydroxycarbonsäure ist beispielsweise die Dimethylolpropionsäure.

Um zur Salzbildung befähigte Sulfonsäuregruppen einzuführen, kann den Polyolen eine Diaminosulfonsäure zugesetzt werden. Beispiele sind 2,4-Diaminobenzolsulfonsäure aber auch die N-(w-Amino-alkan)-w'-aminoalkansulfonsäuren wie sie in der DE 20 35 732 beschrieben sind.

Erfindungsgemäß ist es bevorzugt, die zu verwendenden Polyurethan-Prepolymeren mit Hilfe von Carbonsäure- oder Sulfonsäuregruppen wasserlöslich zu machen, wobei gleichzeitig mit oder an Stelle der anionischen Modifizierungsmittel auch die bereits erwähnten nicht-ionischen Modifizierungsmittel, also zum Beispiel die Etheralkohole oder deren Derivate eingesetzt werden können.

In den erfindungsgemäß eingesetzten Polyurethan-Dispersionen liegen die Polymeren, sofern anionisch modifiziert, in Salzform vor. Bei den bevorzugten mit Carbonsäuren oder Sulfonsäuren modifizierten Polymeren liegen als Gegenionen Alkalimetallsalze, Ammoniak oder Amine, d.h. primäre, sekundäre oder tertiäre Amine vor.

Im Sinne der Erfindung ist es bevorzugt, die Neutralisationsmittel in stöchiometrischem Verhältnis, bezogen auf Säuregruppen oder im Überschuß, einzusetzen.

Die zur Salzbildung befähigten Gruppen können daher durch die Gegenionen teil- oder vollständig neutralisiert werden. Auch ein Überschuß an Neutralisationsmittel ist möglich.

Zur Herstellung der für die erfindungsgemäßen Zwecke insbesondere geeigneten Polyurethane werden die Polyole und ein Überschuß an Diisocyanat unter Bildung eines Polymers mit endständigen Isocyanatgruppen umgesetzt, wobei geeignete Reaktionsbedingungen und Reaktionszeiten sowie Temperaturen je nach dem betreffenden Isocyanat variiert werden können. Der Fachmann weiß, daß die Reaktionsfähigkeit der umzusetzenden Bestandteile ein entsprechendes Gleichgewicht zwischen Reaktionsgeschwindigkeit und unerwünschten Nebenreaktionen, die zu einer Verfärbung und Molekulargewichtsverringerung führen, notwendig macht. Typischerweise wird die Reaktion unter Rühren bei ungefähr 50 bis ungefähr 120°C innerhalb von ungefähr 1 bis 6 Stunden durchgeführt.

Bevorzugtes Herstellverfahren ist das sogenannte Acetonverfahren (D. Dietrich, Angew. Makromol. Chem. 98, 133 (1981)). Weiterhin können die erfindungsgemäß eingesetzten Polyurethan-Dispersionen auch nach dem Verfahren der DE 15 95 602 hergestellt werden. Ein neueres Verfahren zur Herstellung von Polyurethan-Dispersionen ist in der DE 36 03 996 sowie in dem dort angegebenen Stand der Technik, nämlich: DE-PS 8 80 485, DE-AS 10 44 404, US-PS 30 36 998, DE-PS 11 78 586, DE-PS 11 84 946, DE-AS 12 37 306, DE-AS 14 95 745, DE-OS 15 95 602, DE-OS 17 70 068, DE-OS 20 19 324, DE-OS 20 35 732, DE-OS 24 46 440, DE-OS 23 45 256, DE-OS 24 27 274, US-PS 34 79 310 und Angewandte Chemie 82,53 (1970) und Angew. Makromol. Chem. 26,85 ff. (1972) beschrieben.

Von den genannten Verfahren ist insbesondere das "Acetonverfahren" in Analogie zur Lehre der DE-OS 14 95 745 (= US-PS 34 79 310) bzw. zu der DE-OS 14 95 847 (GB-PS 10 67 788) von Bedeutung. Hierbei wird im allgemeinen zunächst ein Prepolymer mit -NCO Endgruppen in einem inerten Lösungsmittel hergestellt, worauf sich die Kettenverlängerung in Lösung zum höhermolekularen Polyurethan anschließt. Der Einbau der für die Dispergierung erforderlichen hydrophilen Gruppen erfolgt vorzugsweise entweder durch Einbau von ionische, potentiell ionische oder nicht-ionisch hydrophile Gruppen tragenden Diolen ins Prepolymer oder durch Verwendung entsprechender Amine als Kettenverlängerungsmittel. Die Dispergierung erfolgt diskontinuierlich in Rührkesseln mit Rührer und evtl. Strombrechern. Das verwendete Lösemittel wird in der Regel unmittelbar nach der Dispergierung in Wasser aus dem Rührkessel abdestilliert.

Weitere Verfahren zur Herstellung von Polyurethan-Prepolymeren, insbesondere zur kontinuierlichen Herstellung von Polyurethan-Prepolymeren, sind in den deutschen Offenlegungsschriften 22 60 870, 23 11 635 und 23 44 135 beschrieben.

Die in den erfindungsgemäßen Klebestiften eingesetzten Polyurethan-Dispersionen können jedoch auch ohne Mitverwendung von Aceton als Lösungsmittel hergestellt werden. Hierzu kann man von den im Sinne der Erfindung bevorzugten Polyolen auf Basis Polytetrahydrofuran oder dessen Copolymeren mit Ethylenoxid oder Propylenoxid ausgehen, wobei vorzugsweise niedrige molekulare Polyole, etwa solche mit einem Molgewicht bis 2.000 oder bis 1.000, eingesetzt werden. Die Polyole werden dann in einem OH : NCO - Verhältnis in Gegenwart eines Polyols, das Säuregruppen trägt, also z.B. von Dimethylolpropionsäure, in einem OH : NCO - Verhältnis größer 1 : 1,2 umgesetzt, wobei noch rührbare Harze entstehen, die dann direkt in Wasser dispergiert werden können.

Im Sinne der Erfindung ist es bevorzugt, Polyurethan-Dispersionen einzusetzen, die klar bis opak sind.

Um im wesentlichen klare, d. h. transparente opake bis wasserklare Polyurethan-Dispersionen zu erhalten, muß der Fachmann auf ein bestimmtes Verhältnis zwischen der zur Salzbildung befähigten Komponente und den übrigen, das Polyurethan aufbauenden Stoffe achten. So ist es zweckmäßig, die zur Salzbildung befähigte Komponente - berechnet als Dimethylolpropionsäure - in Mengen von 1 bis 30, vorzugsweise von 2 bis 20, und insbesondere von 10 bis 18 Gew.-%, bezogen auf Polyol, einzusetzen. Bezogen auf Polyurethanfeststoff und berechnend als Dimethylolpropionsäure sind dies 5 bis 35 Gew.-%, vorzugsweise 5 bis 20 Gew.-% und insbesondere 5 bis 15 Gew.-%. Weiterhin hängt die Transparenz vom Neutralisationsgrad ab. Dabei kann der Fachmann durch wenige Vorversuche feststellen, ab welcher Menge an Ionenbildung befähigtem Modifizierungsmittel bzw. ab welcher Menge an Neutralisationsmittel ein ausreichender Grad an Transparenz erreicht ist. Im allgemeinen wird so wenig wie möglich von diesen Stoffen eingesetzt werden, da sie bei überhöhtem Einsatz die Wasserfestigkeit des Klebefilms stören können.

Neben oder anstelle der Modifizierung mit zur Salzbildung befähigten Komponenten kann auch eine nicht-ionische Modifizierung stattfinden. Zur nicht-ionischen Modifizierung eignen sich in erster Linie Monoalkohole, die durch Umsetzung von primären Alkoholen mit Ethylenoxid erhalten werden. Die erforderliche Menge an nicht-ionischen Modifizierungsmitteln ist von der Hydrophilie des Gesamtsystems abhängig, d.h. sie ist dann niedriger, wenn zum Aufbau des Polymeren als Polyole bereits Polyole auf Basis Polyethylenglykol eingesetzt worden sind. Selbstverständlich ist die Menge auch dann niedriger, wenn zusätzlich ionische Gruppen eingebaut werden. Die Obergrenze ist durch die Wasserfestigkeit des Klebefilms gegeben. So können sich beispielsweise, bezogen auf Feststoff, bis zu 85 Gew.-% des Polyurethans von Ethylenoxid herleiten. Verzichtet man auf eine ionische Modifizierung, so liegen übliche Werte bei 5 bis 50 Gew.-%. Bei der Mitverwendung von ionischen Modifizierungsmitteln kann jedoch jeder andere darunterliegende Wert eingestellt werden.

Bei der Herstellung der den erfindungsgemäßen Klebestiften zugrundeliegenden Polyurethan-Dispersionen hat der Fachmann auf das Verhältnis von Hydroxylgruppen zu Isocyanatgruppen zu achten. Dieses kann zwischen 1,0 : 0,8 und 1,0 : 4,0 liegen. Bevorzugt sind Verhältnisse von 1,0 : 1,1 bis 1,0 : 2,0, insbesondere 1,0 : 1,1 bis 1,0 : 1,8. Entsprechende Polyurethan-Dispersionen können in einem weiten Konzentrationsbereich hergestellt werden. Bevorzugt sind Zubereitungen mit einem Feststoffgehalt zwischen 20 und 80 Gew.-%, insbesondere 35 bis 60 Gew.-%.

Die erfindungsgemäßen Klebestifte enthalten als Seifen zur Ausbildung der Gelstruktur Natriumsalze von $C_{12}$ bis $C_{20}$ Fettsäuren natürlichen oder synthetischen Ursprungs. Bevorzugt sind hier $C_{12}$ bis $C_{18}$-Fettsäuregemische. Die Natriumsalze der Fettsäuren, also die Seifen, sind in Mengen von 3 bis 20 Gew.-%, bezogen auf Klebestiftmasse, vorzugsweise von 5 bis 12 Gew.-%, vorhanden.

In den erfindungsgemäßen Klebestiften können die bei Klebestiften üblichen Hilfsstoffe miteingesetzt werden. Im Sinne der Erfindung ist es jedoch bevorzugt, Weichmacher und/oder feuchtigsregulierende Stoffe, das sind organische wasserlösliche Lösungsmittel, die üblicherweise in Klebestiften verwandt werden, nicht einzusetzen. Gleichwohl können diese Verbindungen gewünschtenfalls in untergeordneten Mengen vorhanden sein. Es handelt sich dabei um Polyglykolether, insbesondere Polyethylenglykol und Polypropylenglykol, wobei die bevorzugten Polyether ein durchschnittliches Molekulargewicht im Bereich von 200 bis 1.000, insbesondere im Bereich von 500 bis 800, aufweisen. Miteingesetzt werden können weiterhin polyfunktionelle Alkohole wie Glycerin, Trimethylolpropan und dergleichen und/oder Polyetherglykole. So kann beispielsweise gewünschtenfalls ein Gemisch aus Glycerin und Polyethylenglykol mitverwendet werden. Die genannten nicht-flüchtigen organischen Lösungsmittel sollten dabei höchstens in Mengen bis 50 Gew.-%, bezogen auf den Wassergehalt der Stifte, eingesetzt werden.

Neben den hier geschilderten Hauptkomponenten können übliche Hilfsmittel mitverwendet werden, beispielsweise Substanzen, die den leichten und weichen Abrieb fördern. Derartige Substanzen sind beispielsweise Aminocarbonsäuren und/oder ihre Lactame. Geeignete Aminocarbonsäuren bzw. deren Lactame sollten bis zu 12 C-Atomen, insbesondere 4 bis 8 C-Atome enthalten. Der für die praktische Verwendung bevorzugte Vertreter ist Epsilon-Caprolactam bzw. die sich daraus ableitende 7-Aminocapronsäure. Die Menge der zu verwendenden Lactame oder der entsprechenden Aminocarbonsäuren beträgt üblicherweise nicht mehr als 15 Gew.-%, beispielsweise 2,5 bis 15 Gew.-%, bezogen auf die Gesamtstiftmasse.

Als weitere Hilfsstoffe können die erfindungsgemäßen Klebestifte Pigmente, Farbstoffe, Geruchsverbesserer und dergleichen enthalten. Die Mengen dieser Stoffe sind wie üblich untergeordnet. Weitere mögliche Additive sind beispielsweise Füllstoffe, Dextrine, Cellulosederivate, Stärkederivate.

Die Verarbeitung der Mischung erfolgt in an sich bekannter Weise aus den auf Temperaturen bei 60°C, vorzugsweise über 80°C erwärmten Mischungen, aus den Polyurethan-Dispersionen, den Seifenbestandteil und gewünschtenfalls den weiteren Hilfsstoffen. Es ist bevorzugt, diese Mischungen, die leicht schüttbar sind, direkt in Stifthülsen oder ähnliche Gebinde abzufüllen und ohne mechanische Beeinflussung zu den gewünschten Gelen erstarren zu lassen.

Die erfindungsgemäßen Klebestifte zeigen den Vorteil höherer Klebkraft und sind daher nicht nur für die Papierverklebung anwendbar. Sie lassen sich darüber hinaus gewünschtenfalls auch ohne Verwendung wasserlöslicher Weichmacher (wasserlösliche organische Lösungsmittel) oder feuchtigkeitsregulierender Stoffe (ebenfalls wasserlösliche organische Lösungsmittel) herstellen. Erfindungsgemäße Klebestifte weisen im feucht-warmen Klima (z.B. 30°C, 75 % rel. Luftfeuchtigkeit) bedeutend geringere Eigenklebrigkeit auf und sind daher auch unter diesen Bedingungen sauber zu handhaben.

**Beispiele**

Beispiel 1

Herstellung der Polyurethanlösungen bzw. Dispersionen

Die Herstellung der Polyurethanklebrohstoffe erfolgt nach dem Aceton-Verfahren, wobei auch andere Herstellverfahren wie z.B. Dispergierung der extrudierten Präpolymerschmelze (Schmelzextrudierverfahren) möglich sind. Polyisocyanate und Diolkomponenten (Polyetherdiol und Dimethylolpropionsäure) werden in Aceton vorgelegt und bis zur Konstanz des NCO-Wertes unter Rückfluß bei ca. 65 - 80 °C gerührt. Nach Beendigung der Reaktion wird unter heftigem Rühren die angegebene Wassermenge zugegeben, die die berechneten Laugenanteile und evtl. Kettenverlängerer enthält. Das Einbringen hoher Scherkräfte ist für die Qualität und besonders die Homogenität der Dispersion von großer Bedeutung. Nach mehrstündigem Rühren wird das Lösemittel, bis die Acetonkonzentration deutlich unter 0,1 liegt und bis die in Tabelle I enthaltenen Viskositäten und Festkörpergehalte erreicht sind, abdestiliert.

Tabelle I

| Polyurethansystem-Nr. | A | B | C | D |
|---|---|---|---|---|
| Gew.Teile Wasser | 233 | 230 | 200 | 200 |
| "  "  Isophorondiisocyanat | 49 | - | 58,4 | 29,7 |
| "  "  Trimethylhexamethylendiisocyanat | - | 49,5 | - | - |
| "  "  PTHF 2000* | 100 | 90 | - | - |
| "  "  Polyurax PPG 1025** | - | 10 | 100 | - |
| "  "  Pluronic L 61*** | - | - | - | 100 |
| "  "  Dimethylolpropionsäure | 15,6 | 15,6 | 13 | 6,8 |
| "  "  NaOH (100%ig) | 4,7 | 3,5 | 4,1 | 2,2 |
| "  "  NH₃ (100%ig) | - | 0,5 | - | - |
| "  "  Aceton | 50 | 60 | 50 | 50 |
| Festkörpergehalt nach Destillation (%) | 46 | 47 | 41 | 36 |
| Viskosität bei 20°C nach Destillation (mPas) | 4000 | 3800 | 14000 | 12000 |

*Polytetrahydrofuran $M_w$ = 2000 (BASF)

**Polypropylenglykol $M_w$ = 1000 (BP)

***Polyethylenpropylenglykol (EO-Anteil 10%) $M_w$ = 2000 (BASF)

Beispiel 2

Herstellung der Stiftmassen

Die Stiftmassen 1 - 10 werden durch Mischen der Einzelkomponenten aus Tabelle II bei 65 - 80°C erhalten und anschließend in Stifthülsen zum Erkalten abgefüllt, gegebenenfalls wird durch geringfügige Zugabe verdünnter Natronlauge der pH-Wert der Masse im Bereich pH 8 - 11 eingestellt. Der Vergleichsstift 11 wird durch Mischen von 26 Gew.-% PVP (Molekulargewicht ca. 700.000), 8 Gew.-% Natriummyristat, 6 Gew.-% Glycerin, 9 Gew.-% Polypropylenglycol 600 und 51 Gew.-% Wasser bei 75°C hergestellt und ebenfalls zum Erkalten in Stifthülsen abgefüllt. Im Vergleichsstift 12 sind die Glycerin- und Polypropylenglycol-Anteile durch Wasser ersetzt.

## Tabelle II

| Stift-Nr. | 1 | 2 | 3 | 4 | 5 | 6 | 7 | 8 | 9 | 10 | 11 | 12 |
|---|---|---|---|---|---|---|---|---|---|---|---|---|
| Gew.Teil Dispersion A | 93 | 82 | / | / | / | / | / | / | 40 | 35 | / | / |
| " B | / | / | 93,5 | 83 | / | / | / | / | / | / | / | / |
| " C | / | / | / | / | 90 | 85 | / | / | 50 | 45 | / | / |
| " D | / | / | / | / | / | / | 90 | 82 | / | / | / | / |
| PVP | / | / | / | / | / | / | / | / | / | / | 26 | 26 |
| Wasser | / | / | / | / | / | / | / | / | / | / | 51 | 66 |
| Glycerin | / | 7 | / | 6 | / | 4 | 4 | / | / | 6 | 6 | / |
| PPG 600 | / | / | / | / | / | / | / | / | 3 | 8 | 9 | / |
| Na-Myristat | / | 1 | / | / | 7 | 5 | / | 7 | / | / | 8 | / |
| Na-Palmitat | 3 | 3 | 2,5 | 3 | 3 | 6 | 3 | 2 | 3 | / | / | 8 |
| Na-Stearat | 4 | 3 | 4 | 4 | / | / | 3 | 3 | 4 | 3 | / | / |
| Offene Zeit (min)* | 0,7 | 3,0 | 0,8 | 2,5 | 1,0 | 3,5 | 0,7 | 3,5 | 0,8 | 2,5 | 3,5 | / |
| Geschmeidigkeit des Abriebs | gut | sehr gut | gut | sehr gut | gut | sehr gut | gut | sehr gut | gut | sehr gut | sehr gut | System besitzt zu hohe Viskosität und ist selbst bei 95°C nicht in Stifthülsen abfüllbar |
| Zugscherfestigkeiten ** (N/mm²) Holz/Holz | 6,1 | 2,0 | 5,7 | 2,0 | 6,0 | 1,8 | 5,0 | 1,7 | 6,5 | 2,0 | 1,4 | |
| Holz/PVC | 3,4 | 0,5 | 3,5 | 0,4 | 0,9 | 0,4 | 1,0 | 0,5 | 2,5 | 0,8 | 0,2 | |
| Holz/ABS | 2,0 | 0,4 | 2,0 | 0,3 | 1,0 | 0,3 | 0,5 | 0,4 | 1,5 | 0,6 | 0,3 | |
| Holz/Alu | 1,4 | 0,7 | 2,0 | 0,6 | 1,5 | 0,9 | 1,8 | 1,0 | 1,4 | 1,0 | 0,5 | |
| Viskosität bei 60°C (mPas) | 3400 | 2900 | 3300 | 3000 | 3600 | 3000 | 2600 | 2400 | 3800 | 3200 | 9000 | nicht meßbar |

*Maximalzeit bis Papierriß erfolgt nach zweimaligem Auftrag an Schreibmaschinenpapier

**dreifacher beidseitiger Auftrag, nach 3 Tagen zerrissen, gemessen in Anlehnung an DIN 53 254

**Patentansprüche**

1. Formstabiler weich abreibbarer Klebestift, bestehend aus einer wäßrigen Zubereitung eines synthetischen Polymeren und einem Seifengel als formgebender Gerüstsubstanz sowie gewünschtenfalls weiteren Hilfsstoffen, dadurch gekennzeichnet, daß als wäßrige Zubereitung eines synthetischen Polymeren eine zumindest weitgehend lösungsmittelfreie wäßrige Polyurethan-Dispersion enthalten ist.

2. Klebestift nach Anspruch 1, dadurch gekennzeichnet, daß die wäßrige Polyurethan-Dispersion ein Reaktionsprodukt eines Polyols oder einer Polyolmischung, einer zwei- oder mehrfunktionellen Isocyanatkomponente, einer in alkalischer wäßriger Lösung zur Salzbildung befähigten Komponente und/oder eines nicht-ionischen hydrophilen Modifizierungsmittels und gewünschtenfalls eines Kettenverlängerungsmittels enthält.

3. Klebestift nach einem der Ansprüche 1 oder 2, dadurch gekennzeichnet, daß die wäßrige Polyurethan-Dispersion ein Reaktionsprodukt eines Polyether- und/oder Polyesterpolyols als Polyol enthält.

4. Klebestift nach einem der Ansprüche 1 bis 3, dadurch gekennzeichnet, daß die wäßrige Polyurethan-Dispersion ein Reaktionsprodukt eines Polyethylenoxids, Polypropylenoxids oder eines Polytetrahydrofurans und/oder eines Copolymeren der genannten enthält.

5. Klebestift nach einem der Ansprüche 1 bis 3, dadurch gekennzeichnet, daß die wäßrige Polyurethan-Dispersion als Polyolmischung ein Reaktionsprodukt eines Polycarbonatdiols , insbesondere eines aliphatischen Polycarbonatdiols enthält.

6. Klebestift nach einem der Ansprüche 1 bis 5, dadurch gekennzeichnet, daß die wäßrige Polyurethan-Dispersion ein Reaktionsprodukt aus einer Polyolmischung, einer zur Salzbildung in alkalischer Lösung befähigten Komponente und einem Polyisocyanat in einem Verhältnis OH : NCO von 1,0 : 0,8 bis 1,0 : 4,0, vorzugsweise 1,0 : 1,1 bis 1,0 : 2,0, insbesondere 1,0 : 1,1 bis 1,0 : 1,8 enthält.

7. Klebestift nach einem der Ansprüche 1 bis 6 dadurch gekennzeichnet, daß die wäßrige Polyurethan-Dispersion ein Reaktionsprodukt eines zwei- oder mehrfunktionellen aliphatischen Isocyanats.

8. Klebestift nach einem der Ansprüche 1 bis 7, dadurch gekennzeichnet, daß die wäßrige Polyurethan-Dispersion ein Reaktionsprodukt einer zur Salzbildung befähigten Dihydroxycarbonsäure enthält.

9. Klebestift nach einem der Ansprüche 1 bis 8, dadurch gekennzeichnet, daß die Polyurethan-Dispersion ein Reaktionsprodukt enthält, daß die zur Salzbildung befähigten Gruppen in Mengen von 5 bis 35 Gew.-%, vorzugsweise von 5 bis 20 Gew.-% und insbesondere von 5 bis 15 Gew.-%, bezogen auf Polyurethanfeststoff, und berechnet als Dimethylolpropionsäure, enthält.

10. Klebestift nach einem der Ansprüche 1 bis 9, dadurch gekennzeichnet, daß als die Gelstruktur bildende Seife Natriumsalze von $C_{12}$ bis $C_{20}$ Fettsäuren natürlichen oder synthetischen Ursprungs enthalten sind.

11. Klebestift nach einem der Ansprüche 1 bis 10, dadurch gekennzeichnet, daß die Natriumsalze von $C_{12}$ bis $C_{20}$ Fettsäuren in Mengen von 3 bis 20, vorzugsweise 5 bis 12 Gew.-%, bezogen auf Gesamtzubereitung, enthalten sind.

12. Klebestift nach einem der Ansprüche 1 bis 11, dadurch gekennzeichnet, daß als weitere Hilfsstoffe wasserlösliche Weichmacher, Farbstoffe, Duftstoffe und/oder feuchtigkeitsregulierende Stoffe enthalten sind.

13. Verfahren zur Herstellung von Klebestiften nach den Ansprüchen 1 bis 12, dadurch gekennzeichnet, daß man die Seifengel-bildenden Bestandteile und die Polyurethan-Dispersion miteinander vermischt, auf Temperaturen oberhalb von 60°C erwärmt, bis eine gleichmäßige Mischung entstanden ist und diese ohne mechanische Beeinflußung unter Gelbildung abkühlen läßt.

## Claims

1. A dimensionally stable, soft-rubbing adhesive stick consisting of an aqueous preparation of a synthetic polymer and a soap gel as gel-forming component and, optionally, other auxiliaries, characterized in that an at least substantially solvent-free aqueous polyurethane dispersion is present as the aqueous preparation of a synthetic polymer.

2. An adhesive stick as claimed in claim 1, characterized in that the aqueous polyurethane dispersion is a reaction product of a polyol or polyol mixture, a difunctional or more than difunctional isocyanate component, a component capable of salt formation in aqueous alkaline solution and/or a nonionic hydrophilic modifying agent and optionally a chain-extending agent.

3. An adhesive stick as claimed in claim 1 or 2, characterized in that the aqueous polyurethane dispersion contains a reaction product of a polyether and/or polyester polyol as the polyol.

4. An adhesive stick as claimed in any of claims 1 to 3, characterized in that the aqueous polyurethane dispersion contains a reaction product of a polyethylene oxide, polypropylene oxide or polytetrahydrofuran and/or a copolymer of the mentioned homopolymers.

5. An adhesive stick as claimed in any of claims 1 to 3, characterized in that the aqueous polyurethane dispersion contains a reaction product of a polycarbonate diol, more particularly an aliphatic polycarbonate diol, as the polyol mixture.

6. An adhesive stick as claimed in any of claims 1 to 5, characterized in that the aqueous polyurethane dispersion contains a reaction product of a polyol mixture, a component capable of salt formation in alkaline solution and a polyisocyanate in an OH:NCO ratio of 1.0:0.8 to 1.0:4.0, preferably 1.0:1.1 to 1.0:2.0 and more preferably 1.0:1.1 to 1.0:1.8.

7. An adhesive stick as claimed in any of claims 1 to 6, characterized in that the aqueous polyurethane dispersion is a reaction product of a difunctional or more than difunctional aliphatic isocyanate.

8. An adhesive stick as claimed in any of claims 1 to 7, characterized in that the aqueous polyurethane dispersion contains a reaction product of a dihydroxycarboxylic acid capable of salt formation.

9. An adhesive stick as claimed in any of claims 1 to 8, characterized in that the polyurethane dispersion contains a reaction product which contains the groups capable of salt formation in quantities of 5 to 35% by weight, preferably in quantities of 5 to 20% by weight and more preferably in quantities of 5 to 15% by weight, based on polyurethane solids and expressed as dimethylolpropionic acid.

10. An adhesive stick as claimed in any of claims 1 to 9, characterized in that sodium salts of $C_{12-20}$ fatty acids of natural or synthetic origin are present as the gel-forming soap.

11. An adhesive stick as claimed in any of claims 1 to 10, characterized in that the sodium salts of $C_{12-20}$ fatty acids are present in quantities of 3 to 20% by weight and preferably 5 to 12% by weight, based on the preparation as a whole.

12. An adhesive stick as claimed in any of claims 1 to 11, characterized in that water-soluble plasticizers, dyes, fragrances and/or moisture regulators are present as further auxiliaries.

13. A process for the production of the adhesive sticks claimed in claims 1 to 12, characterized in that the soap-gel-forming components and the polyurethane dispersion are mixed together, heated to temperatures above 60°C until a homogeneous mixture has formed and the mixture thus formed is left to cool with gel formation in the absence of any mechanical assistance.

## Revendications

1. Bâton de colle indéformable que l'on peut frotter avec souplesse, constitué par une préparation aqueuse d'un polymère synthétique et par un gel de savon à titre de substance de structure pour la mise en forme, de même qu'éventuellement d'autres substances auxiliaires, caractérisé en ce que, comme préparation aqueuse, il contient un polymère synthétique d'une dispersion aqueuse de polyuréthanne au moins amplement exempte de solvant.

2. Bâton de colle selon la revendication 1, caractérisé en ce que la dispersion aqueuse de polyuréthanne contient un produit réactionnel d'un polyol ou d'un mélange de polyols, d'un composant d'isocyanate bi- ou polyfonctionnel, d'un composant apte à la salification dans une solution aqueuse alcaline et/ou d'un agent de modification hydrophile non ionique et éventuellement d'un agent d'allongement de chaînes.

3. Bâton de colle selon la revendication 1 ou 2, caractérisé en ce que la dispersion aqueuse de polyuréthanne contient un produit réactionnel d'un polyéther- et/ou d'un polyester-polyol comme polyol.

4. Bâton de colle selon l'une quelconque des revendications 1 à 3, caractérisé en ce que la dispersion aqueuse de polyuréthanne contient un produit réactionnel d'un polyéthylène-glycol, d'un polypropylène-glycol ou d'un polytétrahydrofuranne et/ou d'un copolymère de ces derniers homopolymères.

5. Bâton de colle selon l'une quelconque des revendications 1 à 3, caractérisé en ce que la dispersion aqueuse de polyuréthanne contient, comme mélange de polyols, un produit réactionnel d'un polycarbonate-diol, en particulier d'un polycarbonate-diol aliphatique.

6. Bâton de colle selon l'une quelconque des revendications 1 à 5, caractérisé en ce que la dispersion aqueuse de polyuréthanne contient un produit réactionnel constitué par un mélange de polyols, par un composant apte à la salification dans une solution alcaline et par un polyisocyanate dans un rapport OH:NCO de 1,0:0,8 à 1,0:4,0, de préférence de 1,0:1,1 à 1,0:2,0, en particulier de 1,0:1,1 à 1,0:1,8.

7. Bâton de colle selon l'une quelconque des revendications 1 à 6, caractérisé en ce que la dispersion aqueuse de polyuréthanne contient un produit réactionnel d'un isocyanate aliphatique bi- ou polyfonctionnel.

8. Bâton de colle selon l'une quelconque des revendications 1 à 7, caractérisé en ce que la dispersion aqueuse de polyuréthanne contient un produit réactionnel d'un acide dihydroxycarboxylique apte à la salification.

9. Bâton de colle selon l'une quelconque des revendications 1 à 8, caractérisé en ce que la dispersion aqueuse de polyuréthanne contient un produit réactionnel qui contient des groupes aptes à la salification dans des quantités de 5 à 35% en poids, de préférence de 5 à 20% en poids, et en particulier de 5 à 15% en poids, rapportées à la teneur en produits solides du polyuréthanne, et à l'état d'acide diméthylolpropionique.

10. Bâton de colle selon l'une quelconque des revendications 1 à 9, caractérisé en ce que, comme savon formateur de la structure de gel, il contient des sels de sodium d'acides gras en $C_{12}$-$C_{20}$ d'origine naturelle ou synthétique.

11. Bâton de colle selon l'une quelconque des revendications 1 à 10, caractérisé en ce que les sels de sodium d'acides gras en $C_{12}$-$C_{20}$ sont contenus dans des quantités de 3 à 20, de préférence de 5 à 12% en poids, rapportées à la préparation totale.

12. Bâton de colle selon l'une quelconque des revendications 1 à 11, caractérisé en ce que, comme autres substances auxiliaires, il contient des plastifiants hydrosolubles, des colorants, des aromatisants et/ou des substances régulatrices de l'humidité.

13. Procédé pour la préparation de bâtons de colle selon les revendications 1 à 12, caractérisé en ce qu'on mélange conjointement les constituants formateurs de gel de savon et la dispersion de polyuréthanne, on réchauffe le mélange à des températures supérieures à 60°C jusqu'à ce que l'on obtienne un mélange uniforme et on laisse refroidir ce mélange jusqu'à gélification sans influence mécanique.

11